(19) Europäisches Patentamt / European Patent Office / Office européen des brevets

(11) **EP 2 348 660 A1**

(12) **EUROPEAN PATENT APPLICATION**
published in accordance with Art. 153(4) EPC

(43) Date of publication:
**27.07.2011 Bulletin 2011/30**

(51) Int Cl.:
**H04J 14/02** *(2006.01)*          **H04B 10/02** *(2006.01)*

(21) Application number: **09821587.4**

(22) Date of filing: **19.10.2009**

(86) International application number:
**PCT/CN2009/074514**

(87) International publication number:
**WO 2010/045866 (29.04.2010 Gazette 2010/17)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **21.10.2008   CN 200810224620**

(71) Applicant: **Huawei Technologies Co., Ltd.**
**Longgang District**
**Shenzhen 518129 (CN)**

(72) Inventors:
• **QI, Juan**
  **Shenzhen**
  **Guangdong 518129 (CN)**
• **SHEN, Shuqiang**
  **Shenzhen**
  **Guangdong 518129 (CN)**
• **ZHANG, Sen**
  **Shenzhen**
  **Guangdong 518129 (CN)**

(74) Representative: **Pfenning, Meinig & Partner GbR**
**Patent- und Rechtsanwälte**
**Theresienhöhe 13**
**80339 München (DE)**

(54) **OPTICAL SIGNAL MARKING OR DETECTING METHOD, DEVICE AND MARKING AND DETECTING SYSTEM**

(57)     An optical signal identifying method and apparatus are provided. The optical signal identifying method includes: assigning signal IDs with different frequencies to optical signals with different wavelengths, where the signal IDs are controlled in an amplitude-modulation manner according to a binary data sequence; and distinguishing the optical signals with different wavelengths by using different signal IDs. A signal ID detecting method and apparatus, and an optical signal identifying and detecting system are further provided. The optical signals with different wavelengths are distinguished by using the signal IDs controlled in an amplitude-modulation manner according to the binary data sequence, and optical channels of the optical signals with different wavelengths are detected and information such as the optical power is obtained by detecting the signal IDs. Therefore, the number of the identification frequencies of the signal IDs required to distinguish the optical signals is small, and the complexity of detecting the signal IDs is reduced.

FIG. 4

**Description**

This application claims priority to Chinese Patent Application No. 200810224620.8, filed with the Chinese Patent Office on October 21, 2008 and entitled "OPTICAL SIGNAL IDENTIFYING OR DETECTING METHOD AND APPARATUS, AND IDENTIFYING AND DETECTING SYSTEM", which is incorporated herein by reference in its entirety.

**FIELD OF THE INVENTION**

The present invention relates to the field of optical communication, and more particularly, to an optical signal identifying or detecting method and apparatus, and an identifying and detecting system.

**BACKGROUND OF THE INVENTION**

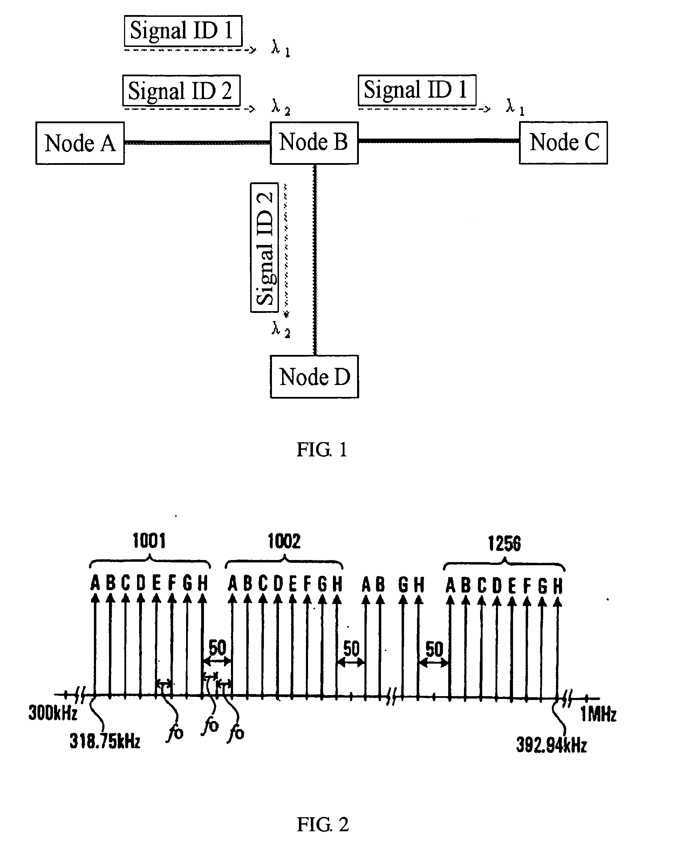

An optical communication network based on Wavelength Division Multiplexing (WDM) can transmit two or more optical signals with different wavelengths at the same time in the same optical fiber. In order to distinguish network topology and detect an optical channel, different scrambling signals are identified on the optical signals with different wavelengths, and then the information, such as a transmission path of the optical signals in the network and the optical power, is obtained by detecting the scrambling signals on various transparent transmission nodes. For example, as shown in FIG. 1, a signal ID 1 and a signal ID 2 are identified on a wavelength λ1 and a wavelength λ2 on a node A, the wavelength λ1 carrying the signal ID 1 on a node B goes to a node C, and the wavelength λ2 carrying the signal ID 2 goes to a node D. The optical channels of the wavelength λ1 and the wavelength λ2 are detected and the information such as the optical power is obtained by detecting the signal IDs on the nodes B, C, and D.

At present, the optical signal identifying method is as follows: Different signal IDs are modulated, in a Frequency Shift Keying (FSK) manner, on various wavelengths, and then the signal IDs are detected by using a Fast Fourier Transform (FFT) algorithm, so as to detect optical channels of different wavelengths and obtain information such as the optical power according to the signal IDs.

For example, in a 256-wave system (256 optical signals with different wavelengths are transmitted at the same time in the same optical fiber) shown in FIG. 2, a transmitter node uses 8 FSK (octal FSK) to assign sine signal IDs on the wavelengths, that is, 8 frequencies are assigned on each wavelength and 8x256=2048 frequencies are required, for example, 1001, 1002, ..., 1256 are different frequency combinations assigned to different wavelengths, and these frequency combinations are not overlapping. A receiver node receives the optical signals with various wavelengths carrying the signal IDs for sampling and FFT in many times, so as to detect the signal IDs, and thus the information, such as the network topology and the optical power, is obtained.

In the implementation of the present invention, the inventors find that the prior art has at least the following problems.

Since the number of the frequencies for identifying the optical signals at the transmitter is large, the complexity of detecting the signal IDs at the receiver is increased, and the detection time is also increased. As shown in FIG. 2, 2048 frequencies exist in the frequency range 300 KHz to 400 KHz of the signal IDs. The more the frequencies for identifying the optical signals are, the more the required sampling points N will be, so as to obtain the FFT frequency points with the corresponding number during the detection of the signal IDs to achieve the precision requirements. If the sampling rate $f_R$ is the same, the larger the number of the frequencies is, the longer the FFT sampling time ($N/f_R$) at a time will be.

**SUMMARY OF THE INVENTION**

Embodiments of the present invention provide an optical signal identifying or detecting method and apparatus, and an identifying and detecting system, so that the number of the identification frequencies of the signal IDs required to distinguish the optical signals is small, and the complexity of detecting the signal IDs is low.

An embodiment of the present invention provides an optical signal identifying method, including:

assigning signal IDs with different frequencies to optical signals with different wavelengths, where the signal IDs are controlled in an amplitude-modulation manner according to a binary data sequence; and distinguishing the optical signals with different wavelengths by using the signal IDs with different frequencies.

An embodiment of the present invention further provides an optical signal identifying apparatus, including:

a signal generator, configured to provide signal IDs with different frequencies, where the signal IDs are controlled in an amplitude-modulation manner according to a binary data sequence; and

a variable optical attenuator, connected to the signal generator, and configured to modulate the different signal IDs on optical signals with different wavelengths, and distinguish the optical signals with different wavelengths by using the signal IDs.

On the basis of the technical concept corresponding to the optical signal identifying method, an embodiment of the present invention also provides a signal ID detecting method, including:

performing continuous m-time FFT on a signal ID, where the signal ID is controlled in an amplitude-modulation manner according to a binary data sequence; obtaining an amplitude value or a phase of the signal ID according to a continuous m-time FFT result; and restoring the signal ID by using the amplitude value or the phase of the signal ID, where m is an integer larger than or equal to 10.

Meanwhile, an embodiment of the present invention further provides a signal ID detecting apparatus, including:

an FFT module, configured to perform continuous m-time FFT on a signal ID, where the signal ID is controlled in an amplitude-modulation manner according to a binary data sequence, where m is an integer larger than or equal to 10; and
a microcontroller, configured to obtain an amplitude value or a phase of the signal ID according to a continuous m-time FFT result, and restore the signal ID by using the amplitude value or the phase of the signal ID.

An embodiment of the present invention further provides an optical signal identifying and detecting system, including:

an optical signal identifying apparatus, configured to assign signal IDs with different frequencies to optical signals with different wavelengths, where the signal IDs are controlled in an amplitude-modulation manner according to a binary data sequence, and the optical signals with different wavelengths are distinguished by using the signal IDs with different frequencies; and
a signal ID detecting apparatus, configured to perform continuous m-time FFT on the signal ID, where m is an integer larger than or equal to 10, obtain an amplitude value or a phase of the signal ID according to a continuous m-time FFT result, and restore the signal ID by using the amplitude value or the phase of the signal ID.

It can be seen from the technical solutions provided above by embodiments of the present invention that.
In the embodiments of the present invention, the optical signals with different wavelengths are distinguished by using the signal IDs controlled in an amplitude-modulation manner according to the binary data sequence, and the optical signals with different wavelengths are detected and the information such as the optical power is obtained by detecting the signal IDs, so that the number of the identification frequencies of the signal IDs required to distinguish the optical signals is small, and the complexity of detecting the signal IDs is reduced.

**DETAILED DESCRIPTION OF THE DRAWINGS**

FIG. 1 is a schematic view of a principle of identifying and detecting optical signals in the prior art;
FIG 2 is schematic distribution view of identification frequencies of FSK in the prior art;
FIG. 3 is a schematic view of relations between a binary baseband rectangle pulse, a signal ID, and a large window of continuous multiple-time FFT;
FIG. 4 is a flow block diagram of an optical signal identifying method according to an embodiment of the present invention;
FIG. 5 is a structural block diagram of an optical signal identifying apparatus according to an embodiment of the present invention;
FIG. 6 is a schematic structural view of an optical signal identifying apparatus according to an embodiment of the present invention;
FIG 7 is a flow block diagram of a signal ID detecting method according to an embodiment of the present invention;
FIG 8 is a flow block diagram of a signal ID detecting method according to an embodiment of the present invention;
FIG 9 is a flow block diagram of a step of restoring a signal ID in a signal ID detecting method according to an embodiment of the present invention;
FIG 10 is a flow block diagram of an detecting method according to an embodiment of the present invention;
FIG. 11 is a flow block diagram of a step of restoring a signal ID in a signal ID detecting method according to an embodiment of the present invention;

FIG. 12 is a schematic view of a phase change of a signal ID in a sampling time window according to an embodiment of the present invention;

FIG. 13 is a schematic view of a noise phase change in a sampling time window according to an embodiment of the present invention;

FIG. 14 is a structural block diagram of a signal ID detecting apparatus according to an embodiment of the present invention;

FIG. 15 is a schematic structural view of a signal ID detecting apparatus according to an embodiment of the present invention;

FIG. 16 is a schematic structural view of a signal ID detecting apparatus according to an embodiment of the present invention; and

FIG 17 is a structural block diagram of an optical signal identifying and detecting system according to an embodiment of the present invention.

## DETAILED DESCRIPTION OF THE EMBODIMENTS

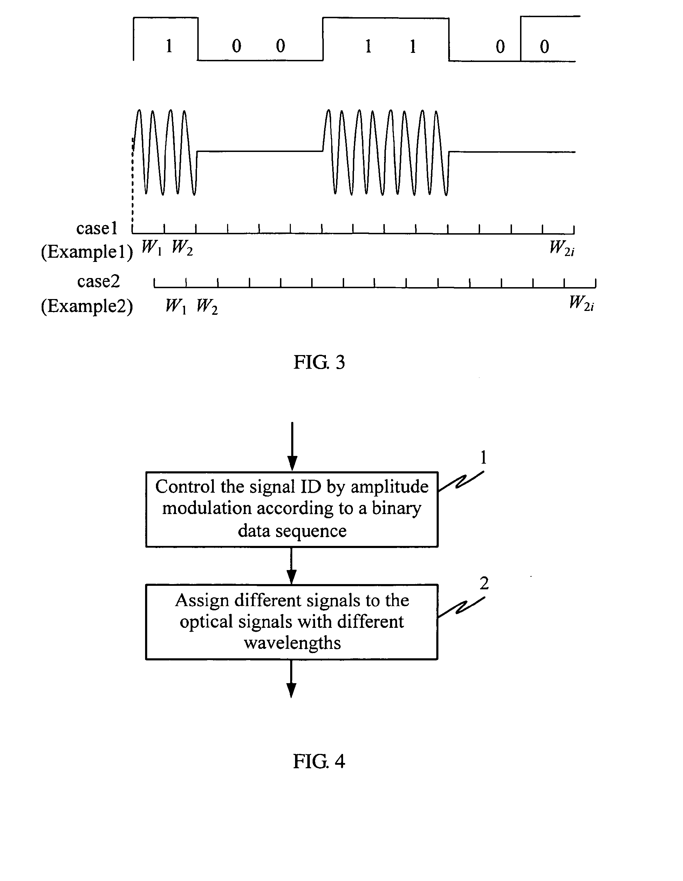

As shown in FIG 4, an embodiment of the present invention provides an optical signal identifying method, including the following steps.

In step 1, signal IDs are controlled in an amplitude-modulation manner according to a binary data sequence.

The signal IDs are controlled in an amplitude-modulation manner according to a binary data sequence (for example, in a binary amplitude keying manner), and the frequency of each signal ID is different.

In step 2, the signal IDs are assigned to optical signals with different wavelengths.

The signal IDs with different frequencies are assigned to the optical signals with different wavelengths, and the signal IDs with different frequencies are modulated to the optical signals with different wavelengths to distinguish the different optical wavelengths.

Specifically, in the identification frequency range, the identification frequency assigned to each wavelength is not overlapping, and the 256-wave system is still taken as an example here. 256 different identification frequencies exist in the identification frequency range 300 KHz to 400 KHz, the binary data sequence is modulated again in the amplitude-modulation manner on the identification frequency signal, so as to carry information.

It can be known that, in the FFT, in order to-enable the identification frequencies of the signal IDs to entirely fall on the frequency points after FFT and improve the sampling precision of the signal IDs, so that the amplitude vale and the phase obtained by using the FFT result are more accurate, and more particularly, to reduce the phase error so as to correctly restore the signal ID, the identification frequency F is required to meet the following relational expression (1):

$$F = q/T \qquad\qquad\qquad (1).$$

In the relational expression (1), q is a positive integer, T is a time window, that is, an FFT sampling time at a time, and 1/T is a frequency interval of the frequency point after the FFT at a time.

That is, the identification frequency is integer times larger than the frequency interval after the FFT, and the identification frequency is ensured to fall on the frequency point after the FFT.

Moreover, in order to obtain a correct signal ID according to a large window after the FFT, at least two large windows $W_i$ are required to exist in one bit transmission time $T_B$ of the signal ID, and $T_B$ meets the following relational expression (2):

$$T_B = n * W_i \qquad\qquad\qquad (2).$$

In the relational expression (2), n is a positive integer and n≥2, $W_i$ is a large window including continuous m time windows T, that is, $W_i$ is a sampling time of continuous m-time FFT, and m is an integer larger than or equal to 10.

It can be seen from the above embodiment that, the signal IDs with different frequencies are configured to distinguish the optical signals with different wavelengths, so that the number of the identification frequencies required to identify the optical signals is small and the complexity of detecting the signal IDs is reduced, and optical channels of the optical signals with different wavelengths are detected and information such as the optical power is obtained by coordinating with the signal ID detecting method.

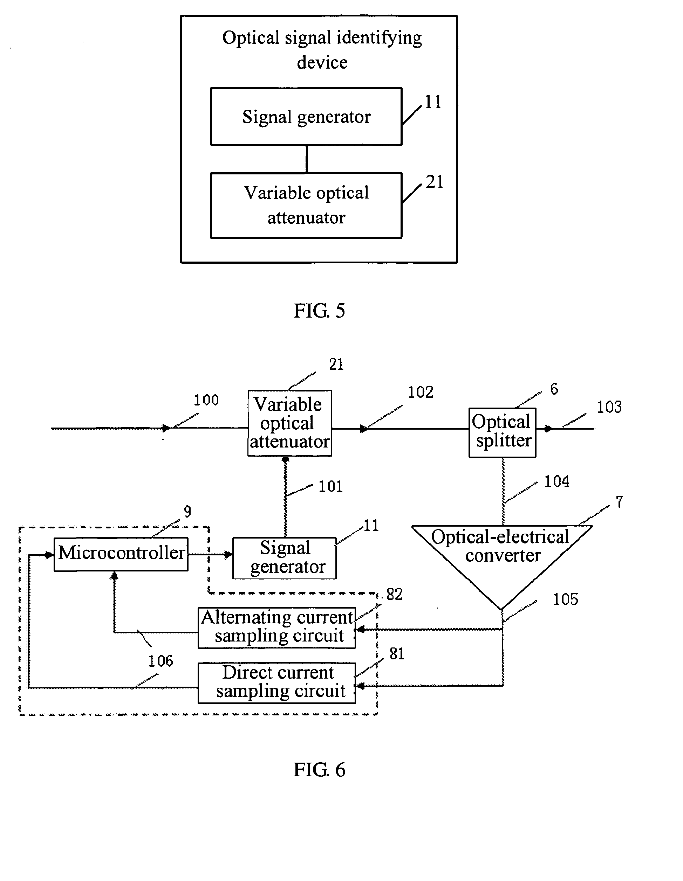

As shown in FIG. 5, an embodiment of the present invention provides an optical signal identifying apparatus, which is configured to implement the optical signal identifying method in the above embodiment. The apparatus includes:

a signal generator 11, configured to provide signal IDs with different frequencies, where the signal IDs are controlled in an amplitude-modulation manner according to a binary data sequence (for example, in a binary amplitude keying manner); and
a variable optical attenuator 21, configured to modulate the signal IDs with different frequencies on the optical signals with different wavelengths, and distinguish the optical signals with different wavelengths according to the signal IDs with different frequencies.

A signal ID 101 provided by the signal generator 11 is taken as an example. The variable optical attenuator 21 modulates the signal ID 101 on an optical signal 100, the optical signal 100 is identified by using the signal ID 101, and the identified optical signal 102 is transmitted in an optical channel.

At least two large windows $W_i$ exist in one bit transmission time of the signal ID 101, the large window $W_i$ is continuous m time windows T, and the time window T is a sampling time of FFT at a time. Moreover, the identification frequencies of the signal IDs all fall on the frequency points after the FFT, and the identification frequency is integer times larger than the frequency interval after the FFT.

It can be seen from the above embodiment that, the optical signal identifying apparatus distinguishes the optical signals with different wavelengths by using the signal IDs controlled by binary amplitude modulation, so that the number of the identification frequencies required to identify the optical signals is small, and the FFT sampling points are also correspondingly a few, thus reducing the complexity of restoring the signal IDs.

As shown in FIG. 6, an embodiment of the present invention provides an optical signal identifying apparatus, which is configured to implement the optical signal identifying method in the above embodiment. The apparatus includes:

a signal generator 11, configured to provide signal IDs with different frequencies, where the signal IDs are controlled in an amplitude-modulation manner according to a binary data sequence (for example, in a binary amplitude keying manner);
a variable optical attenuator 21, configured to modulate the signal IDs with different frequencies on the optical signals with different wavelengths, and distinguish the optical signals with different wavelengths by using signal IDs with different frequencies;
an optical splitter 6, configured to split a few optical signals from the optical signals carrying the signal IDs;
an optical-electrical converter 7, configured to receive and convert the optical signals split from the optical splitter 6 to electrical signals; and
a feedback control circuit, including a microcontroller 9, a direct current sampling circuit 81, and an alternating current sampling circuit 82, and configured to monitor the change of a pilot tone modulation depth of the signal ID, and adjust, through the microcontroller 9, the amplitude of the signal ID generated by the signal generator 11 so as to control the pilot tone modulation depth to a fixed value.

During the specific implementation of the identifying apparatus in this embodiment, the microcontroller 9 controls the signal generator 11 to generate the signal IDs with different frequencies, such as the signal ID 101; the variable optical attenuator 21 modulates the signal ID 101 on the optical signal 100; the optical splitter 6 splits a few optical signals 104 from the optical signals 102 carrying the signal ID 101, and the rest of the optical signals 103 are not affected and are continuously transmitted; the optical-electrical converter 7 receives the optical signals 104 split by the optical splitter 6 and converts the signals into electrical signals 105; the direct current sampling circuit 81 and the alternating current sampling circuit 82 of the feedback control circuit sample to convert the electrical signals 105 into digital electrical signals 106 and transmit the converted signals to the microcontroller 9; and the microcontroller 9 monitors the change of the pilot tone modulation depth of the signal ID 101, and adjusts and controls the amplitude of the signal ID 101 generated by the signal generator 11 so as to control the pilot tone modulation depth to a fixed value, so that the optical power of the wavelength is obtained by calculating through the optical power of the signal ID.

It can be seen from the above embodiment that, the optical signal identifying apparatus distinguishes the optical signals with different wavelengths by using the signal IDs controlled by binary amplitude modulation, so that the number of the identification frequencies required to identify the optical signals is small, and the FFT sampling points are also correspondingly a few, thus reducing the complexity of restoring the signal IDs.

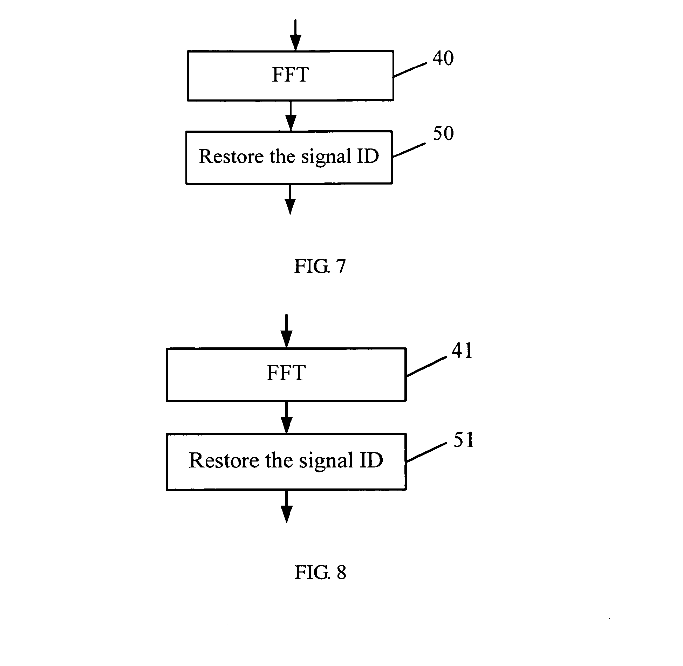

As shown in FIG. 7, an embodiment of the present invention provides a signal ID detecting method, including the following steps.

In step 40, FFT is preformed. Specifically, continuous m-time FFT is performed on a signal ID.

In step 50, the signal ID is restored. Specifically, the signal ID is restored according to a continuous m-time FFT result. Specifically, the signal ID is restored with an amplitude value or a phase of the signal ID obtained according to the continuous m-time FFT.

The signal ID is controlled in an amplitude-modulation manner according to a binary data sequence (for example, in a binary amplitude keying manner), and one bit transmission time of the signal ID is n times longer than a large window, where n is an integer larger than or equal to 2, the large window is a sampling time of the continuous m-time FFT, m is an integer larger than or equal to 10, and the sampling time of the FFT at a time is a time window T.

It can be seen from the above embodiment that, the signal ID controlled by binary amplitude modulation is correctly restored and obtained by analyzing the amplitude value or phase of the signal ID in the large window after multiple-time FFT, so that the complexity of restoring the signal ID is reduced, thus implementing the detection of the optical channel and obtaining the information such as the optical power.

As shown in FIG. 8, an embodiment of the present invention provides a signal ID detecting method, which uses a noise frequency point to generate a noise-removal condition, so as to correctly obtain a signal ID. The method includes the following steps.

In step 41, FFT is preformed. Specifically, continuous multiple-time FFT is performed on a signal ID, for example, performed for 1000 times.

In step 51, the signal ID is restored. Specifically, the signal ID is restored by using an amplitude value obtained according to a continuous multiple-time FFT result.

The signal ID is controlled in an amplitude-modulation manner according to a binary data sequence (for example, in a binary amplitude keying manner), and one bit transmission time of the signal ID is 2 times longer than a large window, that is $T_B$ = n* $W_i$, where n=2, and the large window is a sampling time of performing the continuous 1000-time FFT.

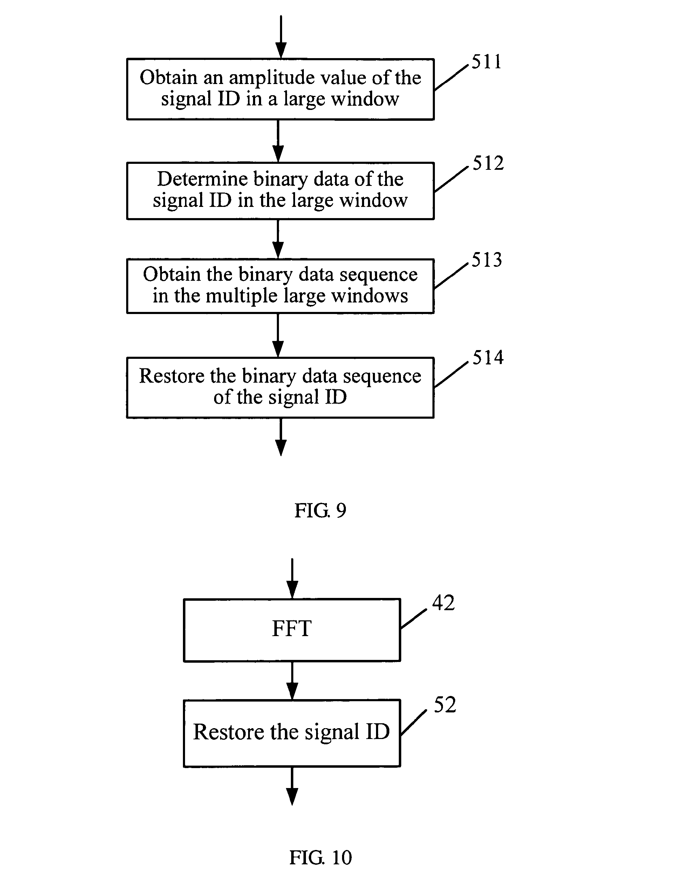

Specifically, as shown in FIG. 9, step 51 that the signal ID is restored with the amplitude value of the signal ID obtained according to the continuous 1000-time FFT result includes the following sub-steps.

In step 511, the amplitude value of the signal ID in the large window $W_i$ is obtained.

Specifically, in order to inhibit the effect of the noises, the large window $W_i$ is the sampling time of 1000-time FFT, and the continuous multiple-time FFT result in each large window $W_i$ is averaged and modulo is performed to obtain the amplitude value $A_i$ of the signal ID in each large window $W_i$.

In step 512, binary data of the signal ID in the large window $W_i$ is determined. Specifically, the amplitude value of the signal ID $A_i$ is compared with a noise-removal threshold L, and if the amplitude value of the signal ID $A_i$ is smaller than the noise-removal threshold L, the large window $W_i$ is considered to fall in a frequency free part of the signal ID, that is, the binary data of the signal ID in the large window is zero; if the amplitude value of the signal ID $A_i$ is larger than or equal to the noise-removal threshold L, the large window $W_i$ is considered to fall in a full frequency or a part of the frequency of the signal ID, that is, the binary data of the signal ID in the large window is 1, and vice versa.

In step 513, a binary data sequence in multiple large windows $W_i$ is obtained. Specifically, a binary data sequence { $D_1$, $D_2$, ..., $D_i$ } is obtained according to the binary data of the signal ID in the multiple large windows $W_i$.

In step 514, the binary data sequence of the signal ID is restored. Specifically, since the identification and detection of the optical signal are not synchronous, and the location on which the large window $W_i$ falls in one bit transmission time of the signal ID is arbitrary, it can be seen from FIG. 3 illustrating the corresponding relation between the baseband rectangle pulse, the signal ID, and the sampling time window that, the location on which the sampling large window falls in one bit transmission time of the signal ID in the two examples is different, so that there are the following possibilities for the binary data sequence obtained in step 513.

In Example 1, a starting point of the large window $W_i$ is the same as a starting point of one bit transmission time of the signal ID (as shown by the dotted line in FIG. 3), and two large windows $W_i$ exist in one bit transmission time (meet $T_B$ = n* $W_i$, n=2), so that the binary data sequence { $D_1$, $D_2$, ..., $D_i$} in multiple large windows obtained in this case is {1,1,0,0,0,0,1,1,1,1,0,0,0,0}.

In Example 2, the starting point of the large window $W_i$ is different from the starting point of one bit transmission time of the signal ID, and the binary data sequence { $D_1$, $D_2$, ..., $Di$} in multiple large windows obtained in this case is {1,1,0,0,0,1,1,1,1,1,0,0,0,1}.

The number of the binary data 1 and 0 in the binary data sequence { $D_1$, $D_2$, ..., $Di$ } may be adjusted by using the following rules according to $T_B$ = n* $W_i$, n=2. Specifically, the number of the continuous binary data 1 in the binary data sequence is rounded to 2, and a rounding result is the number of the corresponding adjusted continuous binary data 1 in the signal ID; and the number of the continuous binary data 0 in the binary data sequence plus 1 is rounded to 2, and a rounding result is the number of the corresponding adjusted continuous binary data 0 in the signal ID.

Example 1 {1, 1, 0, 0, 0, 0, 1, 1, 1, 1, 0, 0, 0, 0} and Example 2 {1, 1, 0, 0, 0, 1, 1, 1, 1, 1, 0, 0, 0, 1) are for illustration. As for the number of the adjusted binary data 1 and 0, and the corresponding binary data sequence of the signal ID, reference can be made to the following Table 1.

| | The number of the continuous binary data 1 is rounded to 2. | The number of the continuous binary data 0 plus 1 is rounded to 2. | The number of the continuous binary data 1 is rounded to 2. | The number of the continuous binary data 0 plus 1 is rounded to 2. |
|---|---|---|---|---|
| The number of continuous binary data 1 and 0 in Example 1 {1,1,0,0,0,0,1,1,1,1,0,0,0,0} | 11 | 0000 | 1111 | 0000 |
| The number of continuous binary data 1 and 0 in Example 2 {1,1,0,0,0,1,1,1,1,1,0,0,0,1} | 11 | 000 | 11111 | 000 |
| The number of adjusted continuous binary data and 0 | 1 | 00 | 11 | 00 |
| The binary data sequence of the signal ID | 1,0,0, 1, 1,0,0 | | | |

The adjusted binary data sequence is obtained according to the number of the adjusted continuous binary data 1 and 0, the adjusted binary data sequence serves as the signal ID, and the optical channel is detected and the information such as the optical power is obtained according to the signal ID.

Likewise, the rules for adjusting the number of the binary data 1 and 0 in the binary data sequence { $D_1$, $D_2$, ..., $Di$ } are obtained according to $T_B$ = n* $W_i$, n≥2. The number of the continuous binary data 1 in the binary data sequence is rounded to n, and a rounding result is the number of the corresponding adjusted continuous binary data 1 in the signal ID; and the number of the continuous binary data 0 in the binary data sequence plus 1 is rounded to n, and a rounding result is the number of the corresponding adjusted continuous binary data 0 in the signal ID.

Moreover, with the change of the wave number in the optical signal and the different numbers of the continuous time windows T contained in the large window $W_i$ (the times of the continuous m-time FFT), the amplitude of the noises is variable, and therefore, the noise-removal threshold L to be compared with the amplitude value of the signal ID is not a fixed value and is also variable.

In the above step 512, the noise-removal threshold L used as reference may be obtained by using the amplitude value of the noise frequency point of the noise frequency other than the identification frequency after the FFT. For example, if the identification frequency range is 300 KHz to 400 KHz, the noise-removal threshold L may be obtained by using the amplitude value of the noise frequency point of the noise frequency between 250 KHz to 300 KHz after the FFT.

It can be seen from the above embodiment that, the noise frequency point is employed to generate a noise-removal condition, so as to correctly restore the signal ID controlled by binary amplitude modulation. Since the number of the identification frequencies required to identify the optical signals is small, the complexity of restoring the signal ID is reduced. The correct signal ID may be obtained by observing and comparing the amplitude value of the signal ID in the large window after multiple-time FFT, so as to implement the detection of the optical channel and obtain the information such as the optical power.

As shown in FIG 10, an embodiment of the present invention provides a signal ID detecting method, which uses a phase change of each frequency point after FFT to correctly restore a signal ID. The method includes the following steps.

In step 42, FFT is preformed. Specifically, continuous multiple-time FFT is performed on a signal ID, for example, performed for 10 times.

In step 52, the signal ID is restored. Specifically, the signal ID is restored by using a phase of the signal ID obtained according to a continuous multiple-time FFT result, so as to restore the signal ID.

The signal ID is controlled in an amplitude-modulation manner according to a binary data sequence (for example, in a binary amplitude keying manner), and one bit transmission time of the signal ID is 2 times longer than the large window, and the large window is a sampling time of performing continuous 1000-time FFT.

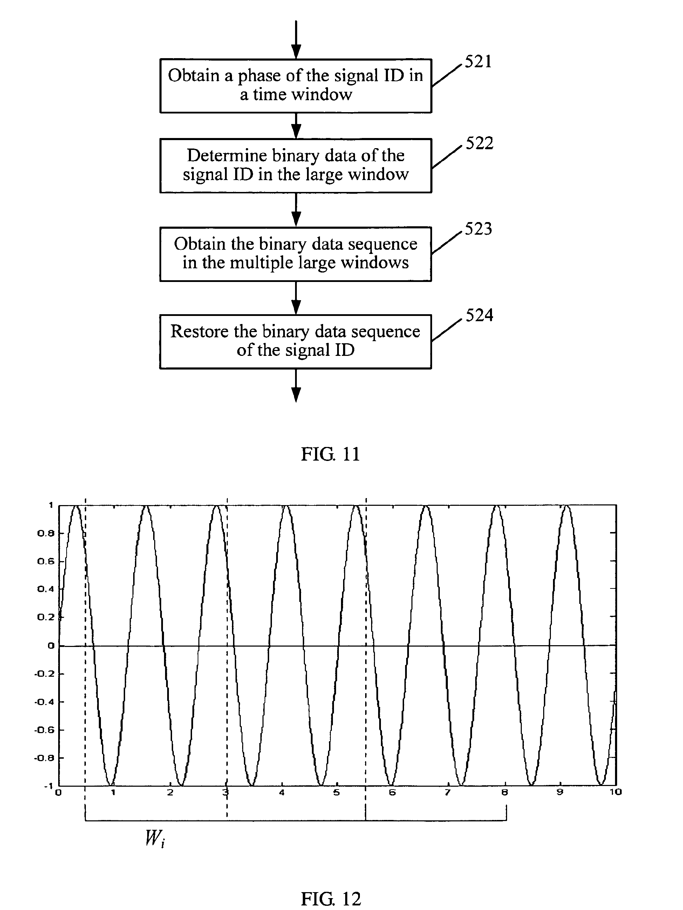

Specifically, as shown in FIG 11, step 52 that the signal ID is restored by using the phase of the signal ID obtained according to the continuous 10-time FFT result includes the following sub-steps.

In step 521, a phase of the signal ID in the time window T is obtained. Specifically, a phase of the signal ID of the FFT result in the time window T is obtained.

In step 522, binary data of the signal ID in the large window $W_i$ is determined. Specifically, as shown in FIG.

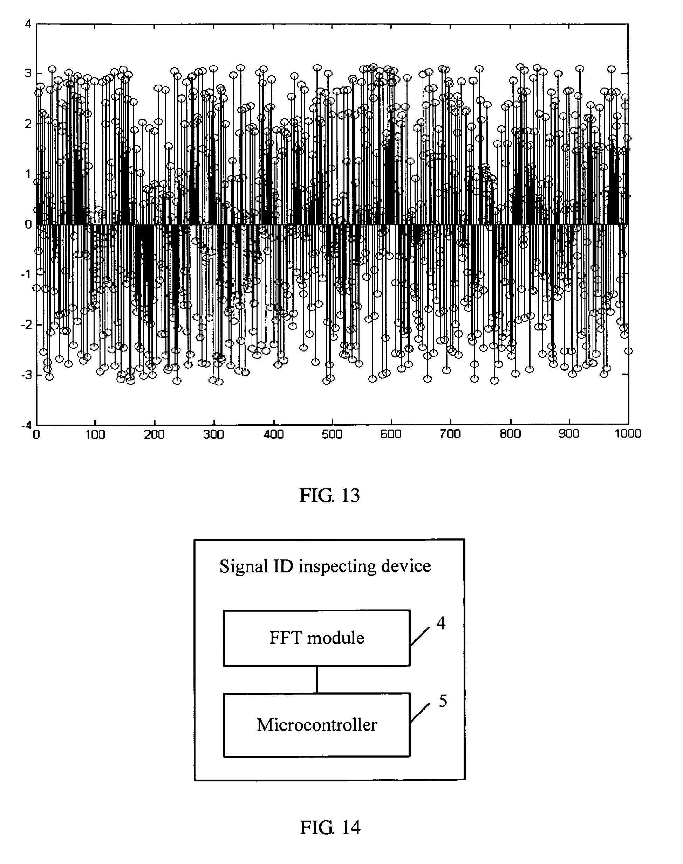

12, ten time windows T exist in the large window $W_i$, the signal ID has an integer number of periods and the initial phase is the same in each time window T, and then the initial phase change of the large window $W_i$ composed by ten continuous time windows T shown in FIG. 12 is a horizontal line (in FIG. 12, the horizontal axis is the time window and the longitudinal axis is the amplitude value). As shown in FIG. 13, an initial phase changing situation of the noises in the 1000 time windows T is emulated by using matlab, it can be seen that the phase change is out of order (in FIG. 13, the horizontal axis is the time window and the longitudinal axis is the phase).

Therefore, the signal ID in the large window $W_i$ composed by the continuous m time windows T is determined by analyzing the phase of the signal ID of the time window T. If the phase change in the large window $W_i$ is regular, the large window $W_i$ is considered to fall in the full frequency of the signal ID, that is, the binary data of the signal ID in the large window is 1; If the phase change in the large window $W_i$ is irregular, if the phase change in the large window $W_i$ is out of order, the large window $W_i$ is considered to fall in an entirely free or partially free part of the signal ID, that is, the binary data of the signal ID in the large window is 0, and vice versa.

In step 523, a binary data sequence in multiple large windows $W_i$ is obtained. Specifically, the binary data sequence $\{ D_1, D_2, ..., D_i \}$ is obtained according to the binary data of the signal ID in the multiple large windows $W_i$.

In step 524, the binary data sequence of the signal ID is restored. Specifically, since the identification and detection of the optical signal are not synchronous, and the location on which the large window $W_i$ falls in one bit transmission time of the signal ID is arbitrary, it can be seen from FIG. 3 illustrating the corresponding relation between the baseband rectangle pulse, the signal ID, and the sampling time window that, the location on which the sampling large window falls in one bit transmission time of the signal ID in the two examples is different, so that there are the following possibilities for the binary data sequence obtained in step 513.

In Example 1, the starting point of the large window $W_i$ is the same as the starting point of one bit transmission time of the signal ID (as shown by the dotted line in FIG. 3), and two large windows $W_i$ exist in one bit transmission time (meet $T_B = n^* W_i$, n=2), so that the binary data sequence $\{ D_1, D_2, ..., D_i \}$ in multiple large windows obtained in this case is {1, 1, 0, 0, 0, 0, 1, 1, 1, 1,0,0,0,0}.

In Example 2, the starting point of the large window $W_i$ is different from the starting point of one bit transmission time of the signal ID, and the binary data sequence $\{ D_1, D_2, ..., D_i \}$ in multiple large windows obtained in this case is {1, 0, 0, 0, 0, 0, 1, 1, 1, 0, 0, 0, 0, 0}.

The number of the binary data 1 and 0 in the binary data sequence $\{ D_1, D_2, ..., D_i \}$ may be adjusted by using the following rules according to $T_B$=n* $W_i$, n=2. Specifically, the number of the continuous binary data 1 in the binary data sequence plus 1 is rounded to 2, and a rounding result is the number of the corresponding adjusted continuous binary data 1 in the signal ID; and the number of the continuous binary data 0 in the binary data sequence is rounded to 2, and a rounding result is the number of the corresponding adjusted continuous binary data 0 in the signal ID.

Example 1 {1, 1, 0, 0, 0, 0, 1, 1, 1, 1, 0, 0, 0, 0} and Example 2 {1, 0, 0, 0, 0, 0, 1, 1, 1, 0, 0, 0, 0, 0} are taken for illustration. As for the number of the adjusted binary data 1 and 0, and the corresponding binary data sequence of the signal ID, reference can be made to the following Table 2.

| | The number of the continuous binary data 1 plus 1 is rounded to 2. | The number of the continuous binary data 0 is rounded to 2. | The number of the continuous binary data 1 plus 1 is rounded to 2. | The number of the continuous binary data 0 is rounded to 2. |
|---|---|---|---|---|
| The number of continuous binary data 1 and 0 in Example 1 {1,1,0,0,0,0,1,1,1,1,0,0,0,0} | 11 | 0000 | 1111 | 0000 |
| The number of continuous binary data 1 and 0 in Example 2 {1,0,0,0,0,0,1,1,1,0,0,0,0,0} | 1 | 00000 | 111 | 00000 |
| The number of the adjusted continuous binary data 1 and 0 | 1 | 00 | 11 | 00 |
| The binary data sequence of the signal ID | 1,0,0,1,1,0,0 | | | |

The adjusted binary data sequence is obtained according to the number of the adjusted continuous binary data 1 and 0, the adjusted binary data sequence serves as the signal ID, and the optical channel is detected and the information such as the optical power is obtained according to the signal ID.

Likewise, the rules for adjusting the number of the binary data 1 and 0 in the binary data sequence { $D_1$, $D_2$, ..., $Di$ } are obtained according to $T_B$ = n* $W_i$, n≥2. Specifically, the number of the continuous binary data 1 in the binary data sequence plus 1 is rounded to n, and a rounding result is the number of the corresponding adjusted continuous binary data 1 in the signal ID; and the number of the continuous binary data 0 in the binary data sequence is rounded to n, and a rounding result is the number of the corresponding adjusted continuous binary data 0 in the signal ID.

With the detecting method for restoring the signal ID by using the phase change of each frequency point after the FFT, it is assumed that the sampling rate $f_R$ is 250000 times/second and the number of the sampling nodes N is 8192, the time window T is 3.3 ms (N/ $f_R$), and one bit transmission time of the signal ID is merely 66 ms ($T_B$ =2*$W$ =2*10*3.3$ms$ = 66ms) according to the FFT result of the ten time windows in the large window $W_i$.

It can be seen from the above embodiment that, with the method for correctly restoring the signal ID by using the phase change of the FFT, since the number of the identification frequencies required to identify the optical signals is small, the complexity of restoring the signal IDs is reduced, and it only requires a few (for example, 10) time windows to determine the signal ID in the large window, thus improving the signal ID detecting speed, so that one bit transmission time of the signal ID is short.

As shown in FIG. 14, an embodiment of the present invention provides a signal ID detecting apparatus, including:

an FFT module 4, configured to perform continuous m-time FFT on a signal ID; and
a microcontroller 5, configured to obtain an amplitude value or a phase of the signal ID according to a continuous m-time FFT result, and restore the signal ID according to the amplitude value or the phase of the signal ID.

The signal ID is controlled in an amplitude-modulation manner according to a binary data sequence (for example, in a binary amplitude keying manner), and one bit transmission time of the signal ID is n times longer than a large window, where n is an integer larger than or equal to 2, and the large window is a sampling time of performing continuous m-time FFT, where m is an integer larger than or equal to 10.

It can be seen from the above embodiment that, the signal ID may be correctly restored and obtained by analyzing the amplitude value or phase of the signal ID in the large window after multiple-time FFT, so that the complexity of restoring the signal ID is reduced, thus implementing the detection of the optical channel and obtaining the information such as the optical power.

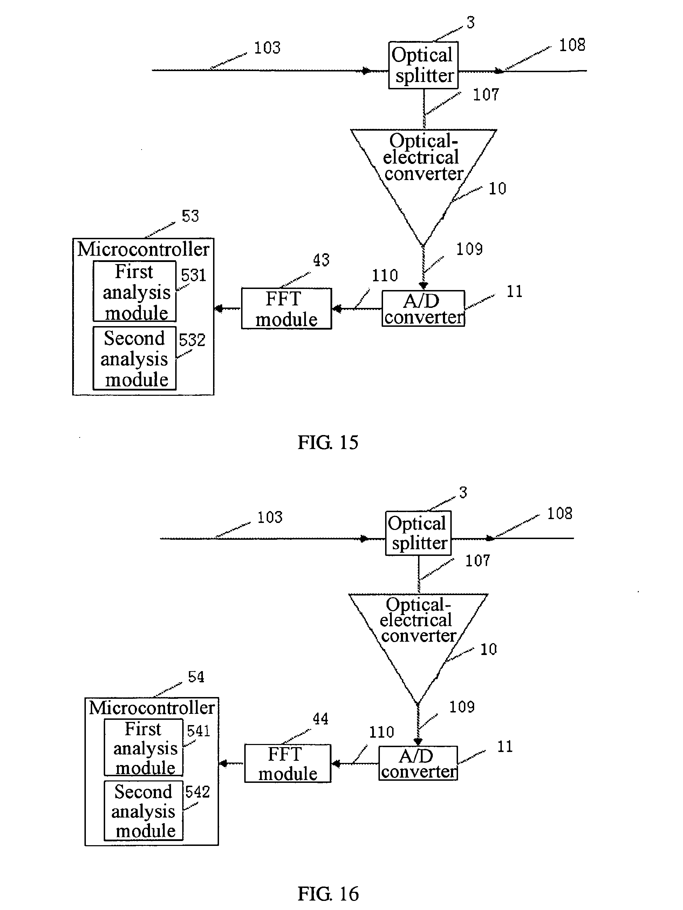

As shown in FIG. 15, an embodiment of the present invention provides a signal ID detecting apparatus, including an optical splitter 3, an optical-electrical converter 10, an analog/digital converter (A/D converter) 11, an FFT module 43, and a microcontroller 53.

The optical splitter 3 is configured to receive optical signals carrying signal IDs and splits a part of the optical signals, where the signal IDs are controlled in an amplitude-modulation manner according to a binary data sequence (for example, in a binary amplitude keying manner), one bit transmission time of the signal ID is 2 times longer than a large window, and the large window is a sampling time of performing continuous FFT, for example, 1000 times.

The optical-electrical converter 10 is configured to convert the optical signals split by the optical splitter 3 into electrical signals, and transmit the electrical signals to the A/D converter 11.

The A/D converter 11 is configured to convert the analog electrical signals into digital electrical signals, and transmit the digital electrical signals to the FFT module 43.

The FFT module 43 is configured to perform continuous multiple-time FFT on the signal ID, for example, perform for 1000 times.

The microcontroller 53 is configured to obtain an amplitude value of the signal ID according to a continuous multiple-time FFT result, so as to restore the signal ID, for example, 1000 times. Specifically, the microcontroller 53 includes a first analysis module 531 and a second analysis module 532. The first analysis module 531 is configured to:

obtain the amplitude value of the signal ID according to the continuous 1000-time FFT result in each large window; determine binary data of the signal ID in each large window by comparing the amplitude value of the signal ID with a noise-removal threshold, where if the amplitude value of the signal ID is smaller than the noise-removal threshold, the binary data of the signal ID in the large window is 0, and if the amplitude value of the signal ID is larger than or equal to the noise-removal threshold, the binary data of the signal ID in the large window is 1; and obtain the binary data sequence according to the binary data of the signal ID in each large window.

The noise-removal threshold is a frequency point amplitude value obtained by performing FFT on a noise frequency other than the frequency of the signal ID.

The second analysis module 532 adjusts the binary data sequence obtained by the first analysis module 531.

As shown in FIG. 3, since the identification and detection of the optical signal are not synchronous, and the location on which the large window $W_i$ falls in one bit transmission time of the signal ID is arbitrary, the binary data sequence may be adjusted by using the following rules according to $T_B$ = n* $W_i$ , for example, n=2.

The number of the continuous binary data 1 is rounded to 2, and a rounding result is the number of the corresponding adjusted continuous binary data 1 in the signal ID; and the number of the continuous binary data 0 plus 1 is rounded to 2, and a rounding result is the number of the corresponding adjusted continuous binary data 0 in the signal ID. Reference can be made to the above Table 1, and the details will not be described herein again.

The adjusted binary data sequence is obtained according to the number of the adjusted continuous binary data 1 and 0, the adjusted binary data sequence serves as the signal ID, and the optical channel is detected and the information such as the optical power is obtained according to the signal ID.

During the specific application of the signal ID detecting apparatus in this embodiment, the optical splitter 3 splits a few optical signals 107 from the optical signals 103 carrying the signal IDs, and the rest of the optical signals 108 are not affected and are continuously transmitted; the optical-electrical converter 10 converts the optical signals 107 split by the optical splitter 3 into electrical signals 109; the A/D converter 11 converts the analog electrical signals 109 into digital electrical signals 110; the FFT module 43 performs FFT sampling and transform; the first analysis module 531 of the microcontroller 53 analyzes and obtains the binary data sequence of the signal ID in the multiple large windows according to the amplitude value of the signal ID obtained by using the FFT result; and the second analysis module 532 of the microcontroller 53 further adjusts the binary data sequence of the signal ID in the multiple large windows, and the adjusted binary data sequence is the signal ID, through which the optical channel detection is implemented and the information such as the optical power is obtained.

It can be seen from the above embodiment that, the detecting apparatus in this embodiment uses the noise frequency point to generate a noise-removal condition, so as to correctly restore the signal ID. Since the number of the identification frequencies required to identify the optical signals is small, the complexity of restoring the signal ID is reduced. The correct signal ID may be obtained by observing and comparing the amplitude value of the signal ID in the large window after multiple-time FFT, so as to implement the detection of the optical channel and obtain the information such as the optical power.

As shown in FIG. 16, an embodiment of the present invention provides a signal ID detecting apparatus, including an optical splitter 3, an optical-electrical converter 10, an A/D converter 11, an FFT module 44, and a microcontroller 54.

The optical splitter 3 is configured to receive optical signals carrying signal IDs and splits a part of the optical signals, where the signal IDs are controlled in an amplitude-modulation manner according to a binary data sequence (for example, in a binary amplitude keying manner), one bit transmission time of the signal ID is 2 times longer than a large window, and the large window is a sampling time of performing continuous FFT, for example, 10 times.

The optical-electrical converter 10 is configured to convert the optical signals split by the optical splitter 3 into electrical signals, and transmit the electrical signals to the A/D converter 11.

The A/D converter 11 is configured to convert the analog electrical signals into digital electrical signals, and transmit the digital electrical signals to the FFT module 44.

The FFT module 44 is configured to perform continuous multiple-time FFT on the signal ID, for example, perform for 10 times.

The microcontroller 54 is configured to obtain a phase of the signal ID according to a continuous multiple-time FFT result, so as to restore the signal ID, for example, 10 times.

Specifically, the microcontroller 54 includes a first analysis module 541 and a second analysis module 542. The first analysis module 541 is configured to:

obtain the phase of the signal ID according to the FFT result in each time window, where the time window is the sampling time of the FFT at a time; determine binary data of the signal ID in each large window by analyzing the phase change of the signal ID in multiple continuous time windows, where if the phase change is regular, the binary data of the signal ID in the large window is 1, and if the phase change is out of order, the binary data of the signal ID in the large window is 0; and obtain the binary data sequence according to the binary data of the signal ID in each large window.

The second analysis module 542 adjusts the binary data sequence obtained by the first analysis module 541. As shown in FIG. 3, since the identification and detection of the optical signal are not synchronous, and the location on which the large window $W_i$ falls in one bit transmission time of the signal ID is arbitrary, the binary data sequence may be adjusted by using the following rules according to $T_B$ = n* $W_i$ , for example, n=2.

The number of the continuous binary data 1 and 0 in the binary data sequence is adjusted. The number of the continuous binary data 1 in the binary data sequence plus 1 is rounded to 2, and a rounding result is the number of the corresponding adjusted continuous binary data 1 in the signal ID; and the number of the continuous binary data 0 in the binary data sequence is rounded to 2, and a rounding result is the number of the corresponding adjusted continuous binary data 0 in the signal ID. Reference can be made to the above Table 2, and the details will not be described herein again.

The adjusted binary data sequence is obtained according to the number of the adjusted continuous binary data 1 and 0, the adjusted binary data sequence serves as the signal ID, and the optical channel is detected and the information such as the optical power is obtained according to the signal ID.

During the specific application of the signal ID detecting apparatus in this embodiment, the optical splitter 3 splits a few optical signals 107 from the optical signals 103 carrying the signal IDs, and the rest of the optical signals 108 are not affected and are continuously transmitted; the optical-electrical converter 10 converts the optical signals 107 split by the optical splitter 3 into electrical signals 109; the A/D converter 11 converts the analog electrical signals 109 into digital electrical signals 110; the FFT module 44 performs FFT sampling and transform; the first analysis module 541 of the microcontroller 54 obtains the binary data sequence of the signal ID in the multiple large windows according to the phase of the signal ID obtained by using the FFT result; and the second analysis module 542 of the microcontroller 53 further adjusts the binary data sequence of the signal ID in the multiple large windows, and the adjusted binary data sequence is the signal ID, through which the optical channel detection is implemented and the information such as the optical power is obtained.

It can be seen from the above embodiment that, the detecting apparatus in this embodiment uses the phase change of the FFT to correctly restore the signal ID. Since the number of the identification frequencies required to identify the optical signals is small, the complexity of restoring the signal ID is reduced, and it only requires a few time windows to determine the signal ID in the large window, thus improving the signal ID detecting speed, so that one bit transmission time of the signal ID is short.

An embodiment of the present invention provides an optical signal identifying and detecting system, including:

an optical signal identifying apparatus, configured to assign signal IDs with different frequencies to optical signals with different wavelengths, where the signal IDs are controlled in an amplitude-modulation manner according to a binary data sequence, and distinguish the optical signals with different wavelengths by using different signal IDs; and

a signal ID detecting apparatus, configured to perform continuous m-time FFT on the signal ID, where m is an integer larger than or equal to 10, obtain an amplitude value or a phase of the signal ID according to a continuous m-time FFT result, and restore the signal ID according to the amplitude value or the phase of the signal ID.

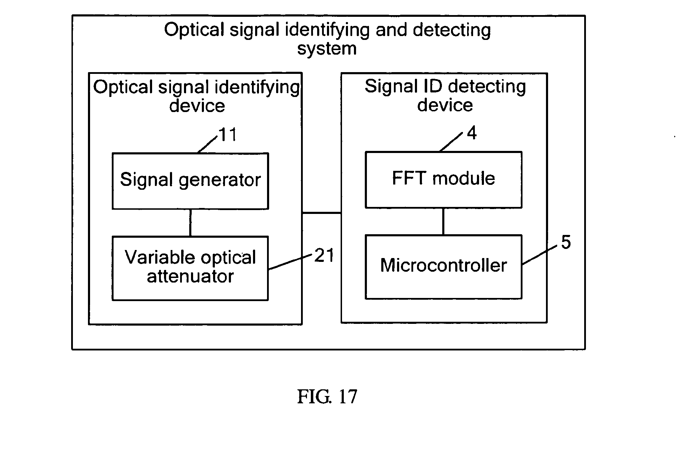

Specifically, as shown in FIG. 17, the optical signal identifying apparatus includes: a signal generator 11, configured to provide signal IDs with different frequencies, where the signal IDs are controlled in an amplitude-modulation manner according to a binary data sequence; and a variable optical attenuator 21, configured to modulate the different signal IDs on the optical signals with different wavelengths, and distinguish the optical signals with different wavelengths according to the different signal IDs.

The signal ID detecting apparatus includes: an FFT module 4, configured to perform continuous m-time FFT on the signal ID, where m is an integer larger than or equal to 10; and a microcontroller 5, configured to analyze the amplitude value or the phase of the signal ID obtained according to the continuous m-time FFT result, so as to restore the signal ID.

It can be seen from the above description that, with the identifying and detecting system, the identifying apparatus of the system uses the signal IDs to distinguish the optical signals with different wavelengths, and the number of the identification frequencies required to identify the optical signals is small. The detecting apparatus of the system uses the amplitude value or phase change of the FFT to correctly restore the signal ID, and the number of the identification frequencies required to identify the optical signals is small, so that the complexity of restoring the signal ID is reduced.

The above descriptions are merely some exemplary embodiments of the present invention, but the protection scope of the present invention is not limited to these embodiments. Any modification, equivalent replacement, or improvement made by persons skilled in the art without departing from the spirit and principle of the present invention shall fall within the protection scope of the present invention. Therefore, the protection scope of the present invention is subject to the protection scope of the claims.

Persons of ordinary skill in the art should understand that all or a part of the steps of the method according to the embodiments of the present invention may be implemented by a program instructing relevant hardware. The program may be stored in a computer readable storage medium. When the program is run, the steps of the method according to the embodiments of the present invention are performed. The storage medium may be a magnetic disk, an optical disk, a Read-Only Memory (ROM), or a Random Access Memory (RAM).

**Claims**

1. An optical signal identifying method, comprising:

assigning signal IDs with different frequencies to optical signals with different wavelengths, wherein the signal IDs are controlled in an amplitude-modulation manner according to a binary data sequence; and distinguishing the optical signals with different wavelengths by using the signal IDs with different frequencies.

2. The optical signal identifying method according to claim 1, wherein one bit transmission time of the signal ID is n times longer than a large window, where n is an integer larger than or equal to 2, and the large window is a sampling time of performing continuous m-time Fast Fourier Transform (FFT), where m is an integer larger than or equal to 10.

3. An optical signal identifying apparatus, comprising:

a signal generator, configured to provide signal IDs with different frequencies, wherein the signal IDs are controlled in an amplitude-modulation manner according to a binary data sequence; and
a variable optical attenuator, configured to modulate the different signal IDs on the optical signals with different wavelengths, and distinguish the optical signals with different wavelengths according to the signal IDs with different frequencies.

4. The optical signal identifying apparatus according to claim 3, wherein one bit transmission time of the signal ID is n times longer than a large window, where n is an integer larger than or equal to 2, and the large window is a sampling time of performing continuous m-time Fast Fourier Transform (FFT), where m is an integer larger than or equal to 10.

5. A signal ID detecting method, comprising:

performing continuous m-time Fast Fourier Transform (FFT) on a signal ID, wherein the signal ID is controlled in an amplitude-modulation manner according to a binary data sequence; obtaining an amplitude value or a phase of the signal ID according to a continuous m-time FFT result; and restoring the signal ID by using the amplitude value or the phase of the signal ID, where m is an integer larger than or equal to 10.

6. The signal ID detecting method according to claim 5, wherein the restoring the signal ID by using the amplitude value of the signal ID obtained according to the continuous m-time FFT result comprises:

obtaining the amplitude value of the signal ID according to the continuous m-time FFT result in each large window; determining binary data of the signal ID in each large window by comparing the amplitude value of the signal ID with a noise-removal threshold, wherein when the amplitude value of the signal ID is smaller than the noise-removal threshold, the binary data of the signal ID in the large window is 0, and when the amplitude value of the signal ID is larger than or equal to the noise-removal threshold, the binary data of the signal ID in the large window is 1; and obtaining a binary data sequence according to the binary data of the signal ID in each large window.

7. The signal ID detecting method according to claim 6, wherein the noise-removal threshold is a frequency point amplitude value obtained by performing the FFT on a noise frequency other than the frequency of the signal ID.

8. The signal ID detecting method according to claim 6 or 7, wherein after obtaining the binary data sequence according to the binary data of the signal ID in each large window, the method further comprises:

adjusting the number of the binary data 1 and 0 in the binary data sequence, wherein the number of the continuous binary data 1 in the binary data sequence is rounded to n, and a rounding result is the number of the corresponding adjusted continuous binary data 1 in the signal ID; the number of the continuous binary data 0 in the binary data sequence plus 1 is rounded to n, and a rounding result is the number of the corresponding adjusted continuous binary data 0 in the signal ID; and one bit transmission time of the signal ID is n times longer than the large window, where n is an integer larger than or equal to 2; and obtaining the adjusted binary data sequence according to the number of the adjusted continuous binary data 1 and 0, and using the adjusted binary data sequence as the signal ID.

9. The signal ID detecting method according to claim 5, wherein the restoring the signal ID with the phase of the signal ID obtained according to the continuous m-time FFT result comprises:

obtaining the phase of the signal ID according to the FFT result of each time window, wherein the time window is a sampling time of the FFT at a time;

determining the binary data of the signal ID in each large window by analyzing a phase change of the signal ID in multiple continuous time windows, wherein when the phase change is regular, the binary data of the signal ID in the large window is 1, and when the phase change is out of order, the binary data of the signal ID in the large window is 0; and

obtaining a binary data sequence according to the binary data of the signal ID in each large window.

10. The signal ID detecting method according to claim 9, wherein after obtaining the binary data sequence according to the binary data of the signal ID in each large window, the method further comprises:

adjusting the number of the continuous binary data 1 and 0 in the binary data sequence, wherein the number of the continuous binary data 1 in the binary data sequence plus 1 is rounded to n, and a rounding result is the number of the corresponding adjusted continuous binary data 1 in the signal ID; the number of the continuous binary data 0 in the binary data sequence is rounded to n, and a rounding result is the number of the corresponding adjusted continuous binary data 0 in the signal ID; and one bit transmission time of the signal ID is n times longer than the large window, where n is an integer larger than or equal to 2; and

obtaining the adjusted binary data sequence according to the number of the adjusted continuous binary data 1 and 0, and using the adjusted binary data sequence as the signal ID.

11. A signal ID detecting apparatus, comprising:

a Fast Fourier Transform (FFT) module, configured to perform continuous m-time FFT on a signal ID, wherein the signal ID is controlled in an amplitude-modulation manner according to a binary data sequence, where m is an integer larger than or equal to 10; and

a microcontroller, configured to obtain an amplitude value or a phase of the signal ID according to a continuous m-time FFT result, and restore the signal ID according to the amplitude value or the phase of the signal ID.

12. The signal ID detecting apparatus according to claim 11, wherein the microcontroller comprises a first analysis module, configured to

obtain the amplitude value of the signal ID according to the continuous m-time FFT result in each large window;

determine binary data of the signal ID in each large window by comparing the amplitude value of the signal ID with a noise-removal threshold, wherein when the amplitude value of the signal ID is smaller than the noise-removal threshold, the binary data of the signal ID in the large window is 0, and when the amplitude value of the signal ID is larger than or equal to the noise-removal threshold, the binary data of the signal ID in the large window is 1; and

obtain a binary data sequence according to the binary data of the signal ID in each large window.

13. The signal ID detecting apparatus according to claim 12, wherein the noise-removal threshold is a frequency point amplitude value obtained by performing the FFT on a noise frequency other than the frequency of the signal ID.

14. The signal ID detecting apparatus according to claim 12 or 13, wherein the microcontroller further comprises a second analysis module,

configured to adjust the number of the binary data 1 and 0 in the binary data sequence, wherein the number of the continuous binary data 1 in the binary data sequence is rounded to n, and a rounding result is the number of the corresponding adjusted continuous binary data 1 in the signal ID; the number of the continuous binary data 0 in the binary data sequence plus 1 is rounded to n, and a rounding result is the number of the corresponding adjusted continuous binary data 0 in the signal ID; and one bit transmission time of the signal ID is n times longer than the large window, where n is an integer larger than or equal to 2; and

obtain the adjusted binary data sequence according to the number of the adjusted continuous binary data 1 and 0, and use the adjusted binary data sequence as the signal ID.

15. The signal ID detecting apparatus according to claim 11, wherein the microcontroller comprises a first analysis module,

configured to obtain the phase of the signal ID according to the FFT result of each time window, wherein the time window is a sampling time of the FFT at a time;

determine the binary data of the signal ID in each large window by analyzing a phase change of the signal ID in multiple continuous time windows, wherein when the phase change is regular, the binary data of the signal ID in the large window is 1, and when the phase change is out of order, the binary data of the signal ID in the large window is 0; and

obtain a binary data sequence according to the binary data of the signal ID in each large window.

16. The signal ID detecting apparatus according to claim 15, wherein the microcontroller further comprises a second analysis module, configured to

adjust the number of the continuous binary data 1 and 0 in the binary data sequence, wherein the number of the continuous binary data 1 in the binary data sequence plus 1 is rounded to n, and a rounding result is the number of the corresponding adjusted continuous binary data 1 in the signal ID; the number of the continuous binary data 0 in the binary data sequence is rounded to n, and a rounding result is the number of the corresponding adjusted continuous binary data 0 in the signal ID; and one bit transmission time of the signal ID is n times longer than the large window, where n is an integer larger than or equal to 2; and

obtain the adjusted binary data sequence according to the number of the adjusted continuous binary data 1 and 0, and use the adjusted binary data sequence as the signal ID.

17. An optical signal identifying and detecting system, comprising:

an optical signal identifying apparatus, configured to assign signal IDs with different frequencies to optical signals with different wavelengths, wherein the signal IDs are controlled in an amplitude-modulation manner according to a binary data sequence, and distinguish the optical signals with different wavelengths by using different signal IDs; and

a signal ID detecting apparatus, configured to perform continuous m-time Fast Fourier Transform (FFT) on the signal ID, where m is an integer larger than or equal to 10, obtain an amplitude value or a phase of the signal ID according to a continuous m-time FFT result, and restore the signal ID according to the amplitude value or the phase of the signal ID.

FIG. 1

FIG. 2

| 1 | 0 | 0 | 1 | 1 | 0 | 0 |

case1
(Example1) $W_1$ $W_2$ $W_{2i}$

case2
(Example2) $W_1$ $W_2$ $W_{2i}$

FIG. 3

Control the signal ID by amplitude modulation according to a binary data sequence — 1

Assign different signals to the optical signals with different wavelengths — 2

FIG. 4

Optical signal identifying device

Signal generator /11

Variable optical attenuator /21

FIG. 5

100 → 21 Variable optical attenuator 102 6 Optical splitter 103

101

9 Microcontroller → 11 Signal generator

104

Optical-electrical converter 7

105

82 Alternating current sampling circuit

106

81 Direct current sampling circuit

FIG. 6

FFT — 40

Restore the signal ID — 50

FIG. 7

FFT — 41

Restore the signal ID — 51

FIG. 8

Obtain an amplitude value of the
signal ID in a large window — 511

Determine binary data of the
signal ID in the large window — 512

Obtain the binary data sequence
in the multiple large windows — 513

Restore the binary data sequence
of the signal ID — 514

FIG. 9

FFT — 42

Restore the signal ID — 52

FIG. 10

```
┌─────────────────────────────┐
│ Obtain a phase of the signal ID in │    521
│        a time window         │
└─────────────────────────────┘
               │
               ▼
┌─────────────────────────────┐
│   Determine binary data of the    │    522
│   signal ID in the large window   │
└─────────────────────────────┘
               │
               ▼
┌─────────────────────────────┐
│ Obtain the binary data sequence   │    523
│   in the multiple large windows   │
└─────────────────────────────┘
               │
               ▼
┌─────────────────────────────┐
│ Restore the binary data sequence  │    524
│        of the signal ID      │
└─────────────────────────────┘
               │
               ▼
```

FIG. 11

$W_i$

FIG. 12

FIG. 13

FIG. 14

103 → 3 Optical splitter → 108

107

Optical-electrical converter

10

109

Microcontroller 53

First analysis module 531

Second analysis module 532

← 43 FFT module ← 110 ← A/D converter 11

**FIG. 15**

103 → 3 Optical splitter → 108

107

Optical-electrical converter

10

109

Microcontroller 54

First analysis module 541

Second analysis module 542

← 44 FFT module ← 110 ← A/D converter 11

**FIG. 16**

Optical signal identifying and detecting
system

Optical signal identifying
device

11

Signal generator

Variable optical
attenuator

21

Signal ID detecting
device

4

FFT module

5

Microcontroller

FIG. 17

## INTERNATIONAL SEARCH REPORT

| International application No. |
| --- |
| PCT/CN2009/074514 |

### A. CLASSIFICATION OF SUBJECT MATTER

See the extra sheet

According to International Patent Classification (IPC) or to both national classification and IPC

### B. FIELDS SEARCHED

Minimum documentation searched (classification system followed by classification symbols)

IPC: H04J,H04B

Documentation searched other than minimum documentation to the extent that such documents are included in the fields searched

Electronic data base consulted during the international search (name of data base and, where practicable, search terms used)

EPODOC, WPI, CNPAT, CNKI :light, optical, mark+, wavelength, frequen+, modula+, FSK, amplitude

### C. DOCUMENTS CONSIDERED TO BE RELEVANT

| Category* | Citation of document, with indication, where appropriate, of the relevant passages | Relevant to claim No. |
| --- | --- | --- |
| X | CN1949688A（HUAWEI TECH CO LTD）18 Apr. 2007 （18.04.2007）,description page 1 lines 7-11,page 9 lines 19-22,claim 12 | 1,3,5-7,9,11-13,15,17 |
| PX | CN101330485A（HUAWEI TECH CO LTD）24 Dec.2008(24.12.2008),claims 10,11,14 | 1,3,5-7,9,11-13,15,17 |
| A | CN101238667A(HUAWEI TECH CO LTD)06 Aug.2008(06.08.2008) ,the whole document | 2,4,8,10,14,16 |
| A | JP2003224528A(ANDO ELECTRIC CO LTD)08 Aug.2003(08.08.2003),the whole document | 2,4,8,10,14,16 |

☐ Further documents are listed in the continuation of Box C.     ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 28 Dec.2009(28.12.2009) | **28 Jan. 2010 (28.01.2010)** |
| Name and mailing address of the ISA/CN<br>The State Intellectual Property Office, the P.R.China<br>6 Xitucheng Rd., Jimen Bridge, Haidian District, Beijing, China<br>100088<br>Facsimile No. 86-10-62019451 | Authorized officer<br><br>SUN Changlu<br><br>Telephone No. (86-10)62411435 |

Form PCT/ISA /210 (second sheet) (July 2009)

## INTERNATIONAL SEARCH REPORT
Information on patent family members

| International application No. |
| --- |
| PCT/CN2009/074514 |

| Patent Documents referred in the Report | Publication Date | Patent Family | Publication Date |
| --- | --- | --- | --- |
| CN1949688A | 18.04.2007 | NONE | |
| CN101330485A | 24.12.2008 | WO2008154881A1 | 24.12.2008 |
| | | US2009263125A1 | 22.10.2009 |
| CN101238667A | 06.08.2008 | WO2008043199A1 | 17.04.2008 |
| | | EP2067290A1 | 10.06.2009 |
| JP2003224528A | 08.08.2003 | NONE | |

Form PCT/ISA /210 (patent family annex) (July 2009)

## INTERNATIONAL SEARCH REPORT

International application No.

PCT/CN2009/074514

**A. CLASSIFICATION OF SUBJECT MATTER**

**H04J14/02 (2006.01) i**

**H04B10/02 (2006.01) i**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 200810224620